# EUROPÄISCHE PATENTANMELDUNG

(11) **EP 4 404 313 A2**
(43) Veröffentlichungstag der Anmeldung: **24.07.2024**
(21) Anmeldenummer: 23214218.2
(22) Anmeldetag: 05.12.2023
(51) Int. Cl.: H01M 6/36, H01M 50/249

(54) **PASSIV GEHEIZTE THERMALBATTERIE**

(30) Priorität: 22.12.2022 DE 102022004875
(71) Anmelder: Diehl Energy Products GmbH, 90552 Röthenbach a. d. Pegnitz (DE); Diehl Defence GmbH & Co. KG, 88662 Überlingen (DE)
(72) Erfinder: Preiß, Walter, 90552 Röthenbach (DE); Clement, Dominik, 90552 Röthenbach (DE); Korthals, Tobias, 78467 Konstanz (DE); Kuhn, Thomas, 88633 Heiligenberg (DE)
(74) Vertreter: Diehl Patentabteilung

(57) **Zusammenfassung**

Eine Energiequelle (10) zur Bereitstellung elektrischer Energie (8) in einem bestimmungsgemäßen Flugkörper (2), der dazu eingerichtet ist, sich bei einem bestimmungsgemäßen Flug (6) an zumindest einem Strukturabschnitt (16) aufzuheizen, so dass dort Wärme (22) zur Verfügung steht, enthält wenigstens eine Thermalbatterie (24) mit wenigstens einer Zelle (26a-c), die einen Elektrolyten (28) enthält, der zur Bereitstellung der elektrischen Energie (8) an der Thermalbatterie (24) durch Eintrag von Wärme (22) zu erwärmen ist, wobei zumindest einer der Elektrolyten (28) thermisch an den Strukturabschnitt (16) koppelbar ist, um zumindest einen Teil der beim Flug (6) am Strukturabschnitt (16) zur Verfügung gestellten Wärme (22) von dort zum Elektrolyten (28) zu übertragen.

Ein Flugkörper (2) enthält die Energiequelle (2), wobei der zumindest eine Elektrolyt (28) thermisch an den Strukturabschnitt (16) gekoppelt ist.

## Beschreibung

Die Erfindung betrifft eine Thermalbatterie zur Bereitstellung elektrischer Energie für bzw. in einem Flugkörper.

Etliche insbesondere militärische Flugkörper (z. B. Lenkflugkörper, Geschosse oder Munition mit internen elektrischen Komponenten, ...) benötigen elektrische Energie zu ihrem Betrieb, z. B. für bordeigene Navigationssysteme, Flugsteuerung, Zielführung, Sucher, Kameras usw. Aus der Praxis ist es bekannt, hierfür elektrische Energie aus einer Thermalbatterie zur Verfügung zu stellen.

Z. B. aus der DE 199 58 411 A1 ist folgendes bekannt:
Thermalbatterien gehören zur Gruppe der Primärbatterien. Im Unterschied zu den allgemein bekannten Batterien wie beispielsweise Alkali-Mangan-Batterien und zu den sogenannten Reserve-Batterien, bei welchen sich der Elektrolyt bis zur Batterie-Aktivierung in einem separaten Behältnis befindet, befindet sich bei den Thermalbatterien der Elektrolyt in der Thermalbatterie-Zelle. Im Lagerzustand der Thermalbatterie liegt der Elektrolyt in fester Form vor. Die Aktivierung einer Thermalbatterie erfolgt durch in die Thermalbatterie integrierte Wärmequellen. Bei diesen Wärmequellen handelt es sich üblicherweise um pyrotechnische Wärmequellen. Bei der Aktivierung der Thermalbatterie schmilzt der Elektrolyt. Erst im geschmolzenen Elektrolyten laufen dann die elektrochemischen und -physikalischen Entladeprozesse ab.

Je nach der Zusammensetzung des Elektrolyten beträgt seine Schmelztemperatur 350 bis 650°C. Oberhalb der Schmelztemperatur weist der Elektrolyt eine gute lonenleitfähigkeit auf, was für die Leistungsfähigkeit der Thermalbatterie von Wichtigkeit ist. Bei Raumtemperatur strebt die lonenleitfähigkeit gegen Null.

Es gibt bislang zwei Lösungswege, die für besonders lange Betriebs- bzw. Laufzeiten bekannter Thermalbatterien auch kombiniert werden, nämlich eine große Wärmemenge zuzuführen und zu speichern, oder für eine entsprechende Wärmeisolation zu sorgen.

Die DE 199 58 411 A1 beschreibt deshalb eine Thermalbatterie mit einer Batteriezelle, die in einer hermetisch dichten Zellen-Hülle angeordnet ist. Um eine Thermalbatterie mit einer langen Betriebs- bzw. Laufzeit zu realisieren, ist eine hermetisch dichte Außenhülle vorgesehen, die von der Zellen-Hülle allseitig beabstandet ist.

Aufgabe der Erfindung ist es, Verbesserungen im Hinblick auf Thermalbatterien vorzuschlagen, die elektrische Energie für bzw. in einem Flugkörper bereitstellen sollen.

Die Aufgabe wird gelöst durch eine Energiequelle gemäß Anspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die Energiequelle dient bzw. ist eingerichtet zur Bereitstellung elektrischer Energie für bzw. in einem bestimmungsgemäßen Flugkörper. Dabei geht die Erfindung von einem Flugkörper aus bzw. setzt einen solchen voraus, der dazu eingerichtet ist, sich bei einem bestimmungsgemäßen Flug an zumindest einem Strukturabschnitt aufzuheizen, so dass dort Wärme zur Verfügung steht. Die Energie im Flugkörper ist während dessen bestimmungsgemäßem Flug zur Verfügung zu stellen. Dabei muss diese noch nicht von Anbeginn des Fluges (Start des Flugkörpers) an zur Verfügung stehen. Eine Energieversorgung in einer späteren Flugphase reicht aus.

"Bestimmungsgemäß" heißt, dass die Energiequelle auf einen bestimmten oder einen bestimmten Typ von Flugkörper konstruktiv / entwurfstechnisch abgestimmt ist und für den Einsatz dort eingerichtet ist; z. B. für die dadurch bestimmten Randbedingungen wie Geometrie usw. ausgelegt ist. Mit anderen Worten wird ein betreffender Flugkörper als bekannt hinsichtlich bestimmter Randbedingungen vorausgesetzt. Entsprechendes gilt für den Flug des Flugkörpers, für den bestimmte Voraussetzungen als gegeben angenommen werden. Insbesondere betrifft dies dessen durch Luftreibung verursachte Erwärmung.

Im Sinne der oben genannten bestimmungsgemäßen Eignung werden im Rahmen der Anmeldung daher auch Eigenschaften von Flugkörpern beschrieben und betreffende Aussagen gemacht, obschon der Flugkörper nicht Teil der Energiequelle ist. Diese Aussagen gelten jedoch sinngemäß jedenfalls für den weiter unten beschriebenen erfindungsgemäßen Flugkörper und werden gegebenenfalls dort nicht nochmals explizit wiederholt.

Die Energiequelle enthält wenigstens eine Thermalbatterie. Die Thermalbatterie enthält wenigstens eine Zelle. Jede der Zellen enthält einen Elektrolyten sowie insbesondere zwei Elektroden: Kathode und Anode. Der Aufbau entspricht insofern einer fachüblichen Thermalbatterie. Zur Bereitstellung der elektrischen Energie an der Thermalbatterie ist der Elektrolyt durch Eintrag von Wärme zu erwärmen.

Zumindest einer, insbesondere mehrere oder alle, der Elektrolyten ist thermisch an den Strukturabschnitt koppelbar. In einem Montage- bzw. Betriebszustand ist der betreffende Elektrolyt dann thermisch tatsächlich an den Strukturabschnitt gekoppelt. Die thermische Kopplung dient dazu, um zumindest einen Teil der beim Flug am Strukturabschnitt zur Verfügung gestellten Wärme vom Strukturabschnitt zum Elektrolyten zu übertragen. Dies gilt im Betrieb der Energiequelle bzw. im eingebauten Zustand im Flugkörper, wenn nämlich tatsächlich Wärme am Strukturelement erzeugt wird und daher zur Verfügung steht.

Der Begriff "Flugkörper" ist hier insbesondere ein militärischer Flugkörper und insbesondere weit zu verstehen und schließt dann zum Beispiel auch Munition bzw. Geschosse ein, die während ihres bestimmungsgemäßen Fluges mit elektrischer Energie zu versorgen sind.

Die Aufheizung des Strukturabschnitts des Flugkörpers ist insbesondere eine aerodynamische Aufheizung im Sinne einer "hohen" Aufheizung. Letzteres bedeutet, dass der Strukturabschnitt bei seinem bestimmungsgemäßen Flug Temperaturen über 300°C, über 350 °C, über 400 °C, über 500 °C erreicht und nach Erreichen auch hält. Auch die Thermalbatterie bzw. die Zelle bzw. der Elektrolyt ist insbesondere auf Temperaturen von mindestens 350°C oder mindestens 400 °C aufzuheizen bzw. wird dieser im Betrieb tatsächlich entsprechend aufgeheizt. Die Übertragung der Wärme vom Strukturabschnitt zum Elektrolyten erfolgt insbesondere durch selbsttätige Wärmeleitung anhand eines Temperaturgefälles, welches vom Strukturabschnitt zum Elektrolyten hin besteht.

Die Erfindung beruht auf folgenden Erkenntnissen:
Eine Thermalbatterie ist eine aktivierbare Batterie und dient vorzugsweise, wie im vorliegenden Fall, dem Betrieb eines Flugkörpers. Aus der Praxis ist es bekannt, vor Abschuss eines Flugkörpers die Thermalbatterie durch einen Stromimpuls zu aktivieren. In der Folge kann der Flugkörper dann gestartet werden. Die Thermalbatterie dient insbesondere der Versorgung sämtlicher elektrischer Verbraucher zur Steuerung des Flugkörpers.

Eine aus der Praxis bekannte Thermalbatterie besteht aus übereinander geschichteten / Stapel von Pulverpresslingen. Eine Zelle setzt sich in der Regel zusammen aus:
- einem Heat Pellet: Dieses dient zur pyrotechnischen Aufheizung der Thermalbatterie.
- einer Elektrodenscheibe: Diese ist in Bezug auf die Funktionalität der Thermalbatterie inert, hat also keinerlei stromerzeugende / chemische Funktionalität innerhalb der Thermalbatterie. Diese funktioniert lediglich als Wärmespeicher und wirkt daher abschwächend auf den pyrotechnischen Hitzeeintrag für die Elektrodenscheibe angrenzenden Komponenten.
- der eigentlichen elektrochemisch wirksamen Zelle, bestehend aus einer Anode als erster Elektrode, einem Elektrolyten und einer Kathode als zweiter Elektrode.

In der fachüblichen Thermalbatterie wiederholt sich diese Sequenz von Zellen / Elementen in Stapelrichtung und damit elektrischer Reihenschaltung, bis die Spannungsanforderung erfüllt ist. Zusätzlich werden sogenannte End-Heats am Kopf und Fuß der Übereinanderschichtung / am Ende des Stapels eingesetzt, um die Auskühlung über diese Enden zu reduzieren und während der Laufzeit Wärme nachzuführen. Durch die lineare Aneinanderreihung ergibt sich ein so genannter Stack. Dieser wird dann thermisch und elektrisch isoliert, wobei die thermische Isolierung einen großen Teil des Volumens ausmacht.

Gemäß der Erfindung ergibt sich im Gegensatz hierzu eine passive externe Aufheizung für die Thermalbatterie. "Passiv" bedeutet, dass eine aktive Wärmeerzeugung im Flugkörper nicht notwendig ist. Die Wärme entsteht bestimmungsgemäß insofern automatisch / als Neben- bzw. Abfallprodukt beim Betrieb bzw. Flug des Flugkörpers. Gemäß der Erfindung wird diese ohnehin entstehende Wärme zur Aufheizung der Thermalbatterie verwendet. "Extern" bedeutet, dass die für die Thermalbatterie benötigte Wärme nicht innerhalb der Thermalbatterie, wie es fachüblich oben beschrieben wurde, erzeugt wird, sondern von extern, also von außerhalb der Thermalbatterie zugeführt wird, nämlich vom nicht zur Thermalbatterie gehörenden Strukturabschnitt des Flugkörpers.

Im Ergebnis kann dank der Erfindung innerhalb des oben erläuterten fachüblichen Stacks auf alle Komponenten mit Ausnahme der elektrochemisch wirksamen Zellen, bestehend aus Anode, Elektrolyt und Kathode, verzichtet werden. Der dadurch zur Verfügung stehende Bauraum (Raum, der durch Wegfall von Elektrodenscheiben, Heat-Pellets, End-Heats frei wird) wird entweder für die Thermalbatterie nicht mehr benötigt und steht somit im Flugkörper anderweitig zur Verfügung oder kann durch zusätzliche Zellen bzw. geometrische Vergrößerung von Zellen genutzt werden, um die elektrische Kapazität der Thermalbatterie zu erhöhen. In der Praxis kann die elektrische Kapazität einer erfindungsgemäßen Thermalbatterie gegenüber der oben beschriebenen fachüblichen Thermalbatterie bei gleich bleibendem Volumen bzw. Bauraum annähernd verdoppelt werden.

Gemäß der Erfindung ergibt sich damit eine deutliche Leistungssteigerung der Energieversorgung im Flugkörper, die bei gleichem Volumen der Thermalbatterie zum Beispiel weitere Strombedarfe, wie zusätzliche Sucher, bedienen kann.

Gemäß der Erfindung ergibt sich weiterhin der Vorteil bzw. ein Doppelnutzen: Wärme, die vom Strukturteil abzuführen ist, kann zu der Thermalbatterie abgeführt und dort auch durch Aufnahme im Elektrolyten entsorgt werden kann. Weitere Kühlmaßnahmen für das Strukturteil können so reduziert oder auf diese gänzlich verzichtet werden. Die Erfindung bewirkt also auch eine Kühlung des Strukturteils bzw. Flugkörpers.

Die Erfindung beruht auf der Erkenntnis, dass eine Thermalbatterie nur so lange leistungsfähig ist, wie ihre interne Temperatur gleichmäßig oberhalb einer bestimmten Grenztemperatur liegt. Eine derartige Grenztemperatur beträgt z. B. 350 °C. Bei Abkühlung der Thermalbatterie bzw. des Elektrolyten unter diese Grenztemperatur sinkt die Strombelastbarkeit durch steigende innere Widerstände deutlich, obwohl noch elektrische Kapazität vorhanden wäre, die ohne die Abkühlung genutzt werden könnte. Deshalb enthält eine bisher bekannte fachübliche Thermalbatterie eine (insbesondere pyrotechnische) Wärmequelle, die zu Beginn des Leistungsbezuges initiiert wird und die Thermalbatterie schnell aufheizt. Um die anschließend folgende Auskühlung zu verzögern, ist die fachübliche Thermalbatterie thermisch stark isoliert und enthält zusätzlich inerte Masse als Wärmespeicher (Elektrodenscheiben).

Dank der Erfindung kann insbesondere keine Abkühlung stattfinden, wenn - was im Falle aerodynamischer Aufheizung zutrifft - Wärme am Strukturabschnitt während des Fluges ständig weiterhin erzeugt wird und vom Strukturabschnitt an die Thermalbatterie nachgeliefert wird, die Batterie also passiv (die am Strukturabschnitt entstehende Wärme ist quasi Abfallprodukt) extern (die Wärme wird außerhalb der Thermalbatterie am Strukturabschnitt erzeugt bzw. steht dort zur Verfügung) geheizt wird. Daher sind beide o.g. fachüblichen Maßnahmen (Isolierung, Wärmespeicher) nicht notwendig und die Thermalbatterie verfügt über wesentlich mehr elektrische Kapazität bei gleichem Volumen. Sowohl eine fachübliche aufheizende Pyrotechnik als auch eine entsprechende thermische Isolierung und der inerte Wärmespeicher werden gemäß der Erfindung nicht benötigt. Dadurch kann nicht nur die elektrische Kapazität, sondern auch die elektrische Leistungsfähigkeit der Thermalbatterie, vor allem im Endanflug eines Flugkörpers auf ein Ziel wesentlich verbessert werden. In einem derartigen Endanflug liegt in der Regel der höchste Strombedarf vor.

Ein entsprechender Flugkörper enthält also in einem Montagezustand die Energiequelle. Der zumindest eine Elektrolyt ist dann thermisch an den Strukturabschnitt gekoppelt. Insbesondere ist der Flugkörper dazu eingerichtet, sich beim Flug am Strukturabschnitt aufgrund von Reibung mit Luft aufzuheizen. Insbesondere erfolgt die Aufheizung des Strukturabschnitts ausschließlich aufgrund einer entsprechenden Luftreibung. Der Strukturabschnitt ist insbesondere ein mit der Außenhaut des Flugkörpers wenigstes thermisch gekoppelter Strukturabschnitt. Insbesondere ist der Strukturabschnitt ein Strukturabschnitt der Außenhaut des Flugkörpers, also ein Teil der Außenhaut. Insbesondere heizt sich die Außenhaut im Flug bzw. Betrieb des Flugkörpers durch Luftreibung thermisch auf. Der Strukturabschnitt ist insbesondere wenigstens ein Teil einer Unterseite des Flugkörpers. Dies gilt für nicht dauerhaft rotierender Flugkörper. Die "Unterseite" ist dabei bezogen auf deren Orientierung bei einem bestimmungsgemäßen ebenen Geradeausflug des Flugkörpers.

Der dank der Erfindung gekühlte (Abfuhr von Wärme) Strukturabschnitt erfüllt damit zumindest teilweise auch die Funktion eines ansonsten nötigen Hitzeschildes bzw. einer Hitzekachel, da dort durch den Abtransport von Wärme zur Thermalbatterie bzw. zum Elektrolyten hin eine aktive Kühlung des Strukturabschnittes stattfindet. Mit anderen Worten sind dort entsprechende Hitzeschilde oder Kacheln in reduzierter Weise oder gar nicht notwendig, da eine Kühlung des Strukturabschnittes erfolgt.

Insbesondere ist der Flugkörper dazu eingerichtet, sich im Flug mit Überschallgeschwindigkeit fortzubewegen. Dies bedingt in der Regel eine ausreichende aerodynamische Aufheizung der Außenhaut zum Betrieb einer Thermalbatterie.

Die Erfindung beruht daher auch auf der Erkenntnis, dass sich Überschallflugkörper durch Luftreibung deutlich aufheizen. Diese Energie abzuführen, stellt eine Herausforderung dar. Mit der erfindungsgemäßen Passiv geheizte Thermalbatterie werden daher 2 positive Effekte miteinander kombiniert. Zum einen wird durch die Phasenumwandlung des in der Batterie enthaltenen Elektrolyten Wärmeenergie verbraucht, die vom Strukturabschnitt abgeführt wird. Dadurch wird eine Kühlung des Strukturabschnittes erreicht. Zum anderen wird die Thermalbatterie durch die passive Heizung (passiv: die Aufheizung durch Luftreibung entsteht ohnehin und benötigt keinerlei aktive Wärmeerzeugung) Heizung deutlich leistungsfähiger. Mit anderen Worten wird gemäß der Erfindung die passive externe Erwärmung durch Luftreibung des Flugkörpers (Bereitstellung von Wärme am Strukturabschnitt) und der Munition mit hohen Fluggeschwindigkeiten genutzt, um eine Thermalbatterie aufzuheizen und gleichzeitig Wärme in die Phasenumwandlung des Elektrolyten abzuführen. Gemäß der Erfindung ergibt sich damit eine Passiv geheizte Thermalbatterie zur Verwendung in Flugkörper und Munition mit hoher aerodynamische Aufheizung. Gemäß der Erfindung ergibt sich damit eine Energieversorgung von Flugkörpern, die sich mit Überschallgeschwindigkeit bewegen und dadurch eine hohe Aufheizung erfahren. Dies ermöglicht die passive Heizung einer Thermalbatterie. Dadurch besteht die Möglichkeit, die elektrische Kapazität pro Volumen der Thermalbatterie deutlich zu erhöhen, da die interne pyrotechnische Heizquelle und der interne Wärmespeicher sowie die thermische Isolation nicht benötigt werden.

In einer bevorzugten Ausführungsform enthält die Energiequelle ein Wärmeleitelement. Dieses bewirkt - im Montagezustand bzw. Betrieb - die tatsächliche thermische Kopplung von Elektrolyt und Strukturabschnitt zumindest mit. Das Wärmeleitelement ist thermisch an den Elektrolyten gekoppelt. Das Wärmeleitelement ist thermisch an den Strukturabschnitt koppelbar, bzw. wie oben erläutert im Betrieb/Montagezustand gekoppelt. Das Wärmeleitelement ist insbesondere eine Wärmeleitpaste oder eine Wärmeleitschicht oder ein Wärmeleitkörper oder ein Kanal usw. Das Wärmeleitelement bewirkt bzw. verbessert die thermische Kopplung, insbesondere wenn der Strukturabschnitt entfernt vom Elektrolyten angeordnet ist, sich beide also nicht zur Wärmekopplung berühren können. In diesem Fall überträgt das Wärmeleitelement die entsprechende Wärme vom Strukturabschnitt zum Elektrolyten über die dazwischenliegende Entfernung. Durch diese Maßnahme kann entweder ein entfernt vom Strukturabschnitt liegender Elektrolyt überhaupt thermisch an den Strukturabschnitt gekoppelt werden oder die thermische Kopplung kann verbessert werden. Dies wird z. B. erreicht, indem das Wärmeleitelement eine flächige / vollständige Anlage durch Geometrieanpassung beider Elemente bewirkt.

In einer bevorzugten Ausführungsform enthält die Thermalbatterie wenigstens zwei Baugruppen. Jede der Baugruppen enthält jeweils mindestens eine Zelle mit einem jeweiligen Elektrolyten. Die Baugruppen können dabei insbesondere baulich, ggf. auch räumlich getrennt sein. Demnach ergibt sich ein modularer Aufbau der Thermalbatterie. Die Thermalbatterie kann damit im Flugkörper räumlich besser verteilt werden. Insbesondere kann diese damit an verschiedenen Stellen des Flugkörpers dort jeweils zur Verfügung stehende Wärme aufnehmen bzw. auch abführen. Mit anderen Worten kann so in vereinfachter Weise auch eine Kühlung des Flugkörpers an räumlich verteilten Stellen erfolgen.

In einer bevorzugten Variante dieser Ausführungsform sind wenigstens zwei der Baugruppen elektrisch zu einer Gesamtbatterie verbunden. Die elektrische Verbindung kann in einer Serien- und/oder Parallelschaltung bestehen. Somit lassen sich insgesamt leistungsfähige Gesamtbatterien erstellen.

In einer bevorzugten Ausführungsform ist wenigstens einer der Elektrolyten dadurch thermisch an den Strukturabschnitt koppelbar, dass die Thermalbatterie (bzw. deren entsprechende Zelle / Abschnitt mit dem Elektrolyten) unmittelbar am Strukturabschnitt angebracht ist." Unmittelbar" bedeutet einerseits, dass kein oben erläutertes Wärmeleitelement zwischen Strukturabschnitt und Thermalbatterie / Zelle / Elektrolyt angeordnet ist. Nicht als Wärmeleitelement betrachtet werden Strukturteile der Thermalbatterie selbst wie z. B. eine zwingend notwendige Einfassung / Behältnis / Gehäuse für den Elektrolyten. Andererseits kann auch ein Wärmeleitelement lediglich als Minimalelement vorliegen, zum Beispiel als eine dünne Schicht einer Wärmeleitpaste oder einer folienartigen geometrischen Anpassungsstruktur. Das Wärmeleitelement entartet in diesem Fall praktisch zu einem Nullelement. "Dünn" bedeutet, dass deren geometrische Dicke sehr viel kleiner als die geometrischen Abmessungen der Thermalbatterie / des Elektrolyten sind, zum Beispiel um mindestens einen Faktor 10, 100, 1000 usw. kleiner.

Mit anderen Worten existiert also kein irgendwie relevantes Wärmeleitelement zwischen Strukturabschnitt und Thermalbatterie, so dass diese unmittelbar aneinander angebracht sind. Insbesondere erfolgt eine unmittelbare thermische Kopplung beider Elemente durch Anlage aneinander. Dies führt zu einer thermisch wie auch geometrisch besonders effektiven Energiequelle sowie der oben genannten Kühlung des Strukturabschnittes.

In einer bevorzugten Ausführungsform weist der Strukturabschnitt eine bestimmte Geometrie auf. Die Thermalbatterie (bzw. Zelle, Elektrolyt) weist dann zumindest im Bereich des Elektrolyten eine an die Geometrie derart angepasste Gegengeometrie auf, dass Thermalbatterie und Strukturabschnitt zur thermischen Kopplung flächig aneinander anlegbar sind bzw. im Montagezustand entsprechend flächig aneinander anliegen. Mit anderen Worten erfolgt eine "konturgerechte" Gestaltung der Thermalbatterie, also zur Anlage angepasst an die Kontur des Strukturabschnittes bzw. des Flugkörpers. Die Anpassung von Geometrie und Gegengeometrie erfolgt insbesondere im Rahmen einer unmittelbaren Anbringung wie oben erläutert. Damit ergibt sich ebenfalls eine besonders gute thermische Kopplung von Elektrolyt und Strukturabschnitt sowie eine besonders raumsparende Ausführung der Thermalbatterie im Flugkörper.

In einer bevorzugten Ausführungsform ist die Thermalbatterie zumindest im Bereich des Elektrolyten (siehe oben) selbst flächig und zur Anlage am Strukturabschnitt mit deren Flachseite ausgebildet. Mit anderen Worten ist die Thermalbatterie zum Beispiel flachquaderförmig ausgeführt, in etwa nach Art einer den Strukturabschnitt bedeckenden Schicht, also im Montagezustand mit ihrer bzw. einer Flachseite am Strukturabschnitt angebracht. Auch dies führt zu einer thermisch sowie geometrisch besonders günstigen Ausführung der Thermalbatterie bzw. des Systems Flugkörper mit Thermalbatterie. "Flächig" bedeutet, dass eine Höhe der Thermalbatterie kleiner als deren Querausdehnung ist, z. B. mindestens um einen Faktor 5, 10, 20, 50 oder 100.

Die folgenden Ausführungsformen gehen stets wenigstens von einem der Elektrolyten aus, der oder die bestimmungsgemäß in einem Montagezustand thermisch tatsächlich an den Strukturabschnitt gekoppelt sind.

In einer bevorzugten Ausführungsform ist wenigstens einem dieser Elektrolyten keine aktive, insbesondere pyrotechnische, Wärmequelle zugeordnet. "Aktiv" bedeutet, dass die Wärmequelle ihrerseits gespeicherte elektrische, chemische oder sonstige Energie enthält oder dieser weitere Energie zugeführt werden müsste.

In einer bevorzugten Ausführungsform ist wenigstens einem dieser Elektrolyten keine thermische Isolierung zugeordnet. Insbesondere ist keine thermische Isolierung zumindest im Bereich der thermischen Kopplung von Strukturabschnitt und Elektrolyt vorhanden.

In einer bevorzugten Ausführungsform ist wenigstens einem dieser Elektrolyten kein interner Wärmespeicher der Thermalbatterie zugeordnet. Unter einem entsprechenden internen Wärmespeicher ist ein zusätzliches Bauteil der Thermalbatterie angesprochen, in Form einer zumindest hinsichtlich der Speichereigenschaft inerten Masse, die nicht zur Energieerzeugung beiträgt, wie zum Beispiel die oben angesprochene Elektrodenscheiben. Angesprochen sind hier jedoch nicht parasitäre Wärmespeichereigenschaften der erfindungsgemäß vorhandenen Komponenten der Thermalbatterie wie zum Beispiel Wärmespeichereigenschaften des Elektrolyten, der Elektroden, eines Gehäuses usw.

Das Fehlen der entsprechenden Komponenten (aktive Wärmequelle, Isolierung, Wärmespeicher) bewirkt die oben genannte Einsparung von Bauraum und Gewicht der Thermalbatterie. Auch führt dies zu einer besonders einfachen Thermalbatterie.

Die Aufgabe der Erfindung wird auch gelöst durch einen Flugkörper gemäß Patentanspruch 11. Der entsprechende Flugkörper und zumindest ein Teil dessen möglicher Ausführungsformen sowie die jeweiligen Vorteile wurden sinngemäß bereits im Zusammenhang mit der erfindungsgemäßen Energiequelle erläutert.

Nochmals zusammengefasst: Der Flugkörper weist die erfindungsgemäße Energiequelle auf, zumindest ein Elektrolyt ist thermisch an den Strukturabschnitt gekoppelt. Insbesondere heizt sich der Flugkörper beim Flug am Strukturabschnitt aufgrund von Luftreibung auf. Insbesondere ist der Strukturabschnitt wenigstens thermisch mit der Außenhaut des Flugkörpers gekoppelt. Insbesondere ist der Strukturabschnitt wenigstens ein Teil einer Unterseite des Flugkörpers. Insbesondere ist der Flugkörper ein Überschallflugkörper.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Die erfindungsgemäße passiv extern geheizte Thermalbatterie wird insbesondere in der Außenhülle eines entsprechend lange und schnell fliegenden Flugkörpers oder einer Munition konturgerecht integriert, sodass sie durch den Reibungswiderstand während des Fluges passiv auf mindestens 400 °C aufgeheizt wird und somit der Elektrolyt elektrisch leitfähig und die Batterie funktionsbereit wird. Vor allem im Endanflug des Flugkörpers auf ein bestimmungsgemäßes Ziel, wo in der Regel der höchste Strombedarf vorliegt, ist die Batterie auf Betriebstemperatur. Die üblichen Probleme mit der Auskühlung als limitierender Faktor der Leistungsfähigkeit der Thermalbatterie zum Laufzeitende liegen dadurch nicht vor. Einzig die Kapazität beschränkt nun die Leistungsfähigkeit. Durch die einzusparenden bzw. nicht vorhandenen aktive Wärmequellen (pyrotechnische Presslinge) und Wärmespeicher (Elektrodenscheiben) besteht die Möglichkeit, die elektrische Kapazität der Thermalbatterie bei gleichbleibendem Volumen gegenüber einer fachüblichen Thermalbatterie deutlich zu erhöhen.

Die gesamte Thermalbatterie bzw. Gesamtbatterie kann modular aus mehreren Einzel-Baugruppen aufgebaut werden. Jede Baugruppe kann dabei beliebig viele Zellen

enthalten. Das dadurch entstehende Baukastenprinzip kann dafür genutzt werden, um zum Beispiel mehrere flächige, also plattenförmige Baugruppen miteinander elektrisch zu verbinden. Die einzelnen Baugruppen können dabei auf die am stärksten thermisch belasteten Stellen bzw. Seiten des Flugkörpers verteilt werden, z. B. die Unterseite des Flugkörpers (nicht rotierender Flugkörper) ist. Deren Funktionalität ähnelt damit derjenigen eines dort anzubringenden Hitzeschildes / Kühlvorrichtung.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: einen erfindungsgemäßen Flugkörper mit erfindungsgemäßer Energiequelle im Längsschnitt,
- Figur 2: den Flugkörper aus Figur 1 im Querschnitt mit einer alternativen Energiequelle.

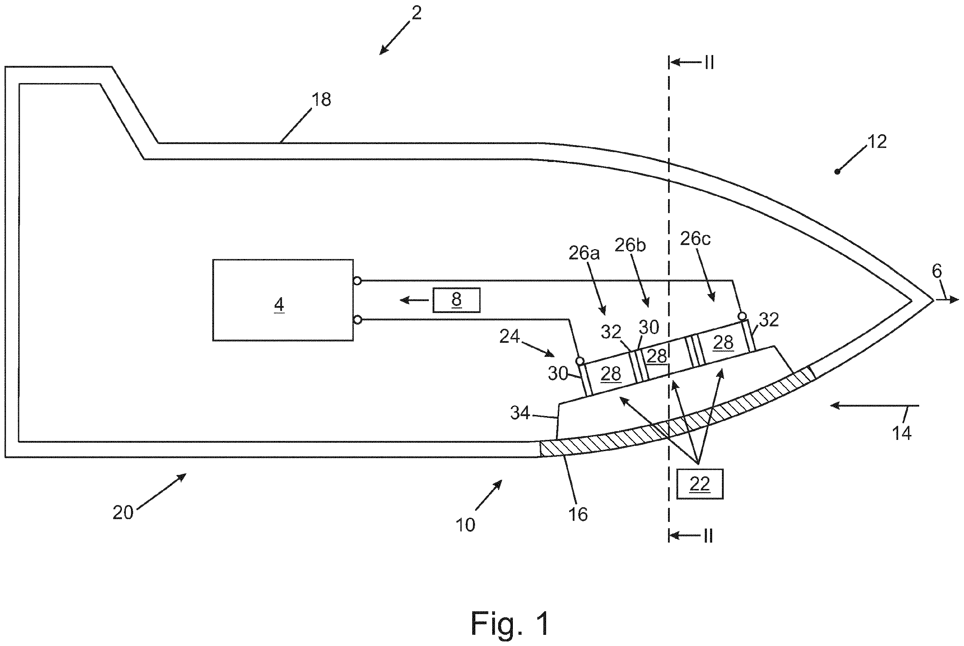

Figur 1 zeigt einen Flugkörper 2 in stark stilisierter Darstellung, hier einen militärischen Lenkflugkörper. Dieser enthält eine elektrische Steuereinrichtung 4, um den Flugkörper während eines bestimmungsgemäßen Fluges 6 (angedeutet durch einen Pfeil in ebener Geradeaus-Flugrichtung) zu einem nicht dargestellten Ziel hin zu lenken, um dieses zu bekämpfen. Zu seinem Betrieb benötigt der Flugkörper 2 bzw. die Steuereinrichtung 4 elektrische Energie 8 (ebenfalls durch einen Pfeil angedeutet). Zur Bereitstellung der elektrischen Energie 8 enthält der Flugkörper 2 eine Energiequelle 10.

Bei seinem Flug 6 mit Überschallgeschwindigkeit durch umgebende Luft 12 strömt diese in Richtung des Pfeils 14 an den Flugkörper 2 an. An einem hier nur symbolisch angedeuteten Strukturabschnitt 16 (in der Figur gestrichelt dargestellt) heizt sich der Flugkörper beim Flug 6 aufgrund der Reibung mit der Luft 12 auf. Diese Aufheizung geschieht ausschließlich aufgrund der anströmenden Luft 12, ist also eine aerodynamische Aufheizung.

Der Strukturabschnitt 16 ist ein Abschnitt der Außenhaut 18 des Flugkörpers 2 und damit mit dieser thermisch gekoppelt. Der Strukturabschnitt 16 ist ein Teil der Unterseite 20 des Flugkörpers 2. Der Flugkörper 2 ist ein nicht dauerhaft rotierender Flugkörper, der sich bei seinem Flug 6 mit Überschallgeschwindigkeit (Richtung des Pfeils 6) fortbewegt.

Die Energiequelle 10 dient zur Erzeugung bzw. Bereitstellung der elektrischen Energie 8 in dem Flugkörper 2, der sich bei seinem Flug 6 am Strukturabschnitt 16 aufheizt, sodass dort durch Luftreibung erzeugte Wärme 22 (symbolisch dargestellt) zur Verfügung steht.

Die Energiequelle 10 enthält eine Thermalbatterie 24. Im Beispiel enthält die Thermalbatterie 24 drei Zellen 26a-c. Jede der Zellen 26a-c enthält einen Elektrolyten 28 sowie jeweils eine Kathode 30 und eine Anode 32. Die Zellen 26a-c sind hier elektrisch in Reihe geschaltet. Die in der Reihenschaltung erste Kathode 30 sowie letzte Anode 32 Stellen nicht näher bezeichnete elektrische Ausgangspole der Thermalbatterie 24 dar, welche über nicht näher bezeichnete elektrische Leitungen die elektrische Energie 8 zur Steuereinrichtung 4 liefern.

Um die elektrische Energie 8 bereitzustellen bzw. zu erzeugen ist die Thermalbatterie 24 durch Eintrag von Wärme 22 zu erwärmen, was in Figur 1 durch Pfeile dargestellt ist. Um diese Erwärmung zu bewerkstelligen, sind alle drei Elektrolyten 28 jeweils thermisch an den Strukturabschnitt 16 gekoppelt. Dank dieser Kopplung wird die Wärme 22 nach deren Entstehung zumindest zum Teil vom Strukturabschnitt 16 abtransportiert und zur Thermalbatterie 24 bzw. den Elektrolyten 28 übertragen. Da die Wärme 22 aufgrund der Luftreibung beim Flug 6 bis zu dessen Ende (erfolgreiches Eintreffen des Flugkörpers 2 am Ziel) permanent entsteht bzw. nacherzeugt bzw. nachgeliefert wird, wird die Thermalbatterie 24 auf 400 °C aufgeheizt und auf dieser Temperatur gehalten. So wird bis zum Ende des Fluges 6 (Eintreffen am Ziel) des Flugkörpers 2 der Elektrolyt 28 auf Betriebstemperatur gehalten und die Thermalbatterie 24 liefert permanent und ausreichend elektrische Energie 8.

Sowohl beim also auch unmittelbar nach dem Abschuss / Start des Flugkörpers 2 steht die Energie 8 noch nicht zur Verfügung. Denn erst im Flug wird der Strukturabschnitt 16 erwärmt und erst in der Folge der Elektrolyt 28, wodurch erst die Bereitstellung der Energie 8 beginnt.

In Anbetracht der bestimmungsgemäßen Flugzeit des Flugkörpers 2 ist dies jedoch unkritisch. Die Energie 8 steht bald genug zur Verfügung, um den Flugkörper 2 rechtzeitig und ab dann dauerhaft zu versorgen.

Um die thermische Kopplung zwischen Elektrolyt 28 und Strukturabschnitt 16 zu bewerkstelligen, enthält die Energiequelle 10 ein Wärmeleitelement 34, welches zwischen Strukturabschnitt 16 und Thermalbatterie 24 angeordnet ist und thermisch sowohl an den Strukturabschnitt 16 als auch an die Thermalbatterie 24 und damit den Elektrolyten 28 gekoppelt ist. Das Wärmeleitelement 34 weist ausreichende Wärmeleiteigenschaften auf, um die Wärme 22 ausreichend schnell und in ausreichender Menge vom Strukturabschnitt 16 zum Elektrolyt 28 zu übertragen. Der Strukturabschnitt 16 dient als einzige Quelle der Wärme 22 für die Thermalbatterie 24. Den Elektrolyten 28 ist keinerlei weitere aktive Wärmequelle zugeordnet. Die Aufheizung des Elektrolyten 28 aufgrund der zugeführten Wärme 22 erfolgt also rein extern von außerhalb der Thermalbatterie 24 sowie passiv, da die Wärme 22 am Strukturabschnitt 16 beim Flug 6 des Flugkörpers 2 durch die Reibung mit der Luft 12 sozusagen als Nebenprodukt ohnehin anfällt. Dem Elektrolyten 28 bzw. der Thermalbatterie 24 ist auch keinerlei thermische Isolierung zugeordnet, da die Wärme 22 dauerhaft nachgeliefert wird und somit Wärmeverluste an der Thermalbatterie 24 unproblematisch sind. Aus dem gleichen Grund ist auch in der Thermalbatterie 24 keinerlei interner inerter Wärmespeicher vorgesehen. Die Wärmespeichereigenschaften der vorhandenen Elemente der Thermalbatterie 24 (Elektrolyt 28, Katode 30, Anode 32, nicht näher dargestelltes Gehäuse, ...) sind hierbei nicht angesprochen, da diese Elemente zwar "parasitär" Wärmespeichereigenschaften aufweisen, jedoch ohnehin in der Thermalbatterie 24 funktional vorhanden sind bzw. sein müssen. Diese sind jedoch nicht alleinig zum Zweck einer Wärmespeicherung vorhanden und daher im vorliegenden Sinne nicht "inert".

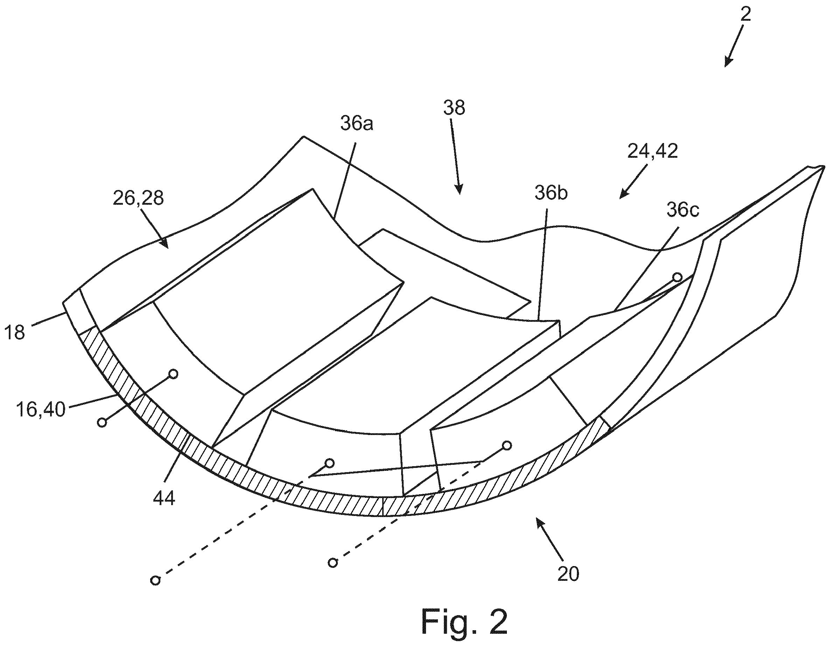

Figur 2 zeigt einen Querschnitt durch einen Teil des Flugkörpers 2 entlang der Ebene II-II in Figur 1, nämlich dessen Unterseite 20. Im Gegensatz zur Ausführungsform nach Figur 1 ist hier die Thermalbatterie 24 alternativ ausgestaltet und weist insgesamt drei Baugruppen 36a-c auf. Jede der Baugruppen 36a-c enthält mehrere, hier nicht näher dargestellte Zellen 26 mit jeweiligen Elektrolyten 28. Alle drei Baugruppen 36a-c sind elektrisch in Reihe geschaltet, was in Figur 2 lediglich symbolisch angedeutet ist. Somit sind sie zu einer Gesamtbatterie 38 in Form der Thermalbatterie 24 verbunden. In einer alternativen, gestrichelt angedeuteten Ausführung ist eine Gesamtbatterie 38 gebildet, die die Baugruppen 36a,b enthält. Die dritte Baugruppe 36c bildet hier - ja nach Sichtweise - eine weitere Teilbatterie der Thermalbatterie 24 oder eine eigene Thermalbatterie 24. Die elektrische Verbindung zwischen den Baugruppen 36b,c entfällt dann. Gesamtbatterie 38 und weitere Teilbatterie dienen dann zur Versorgung unterschiedlicher Verbraucher im Flugkörper 2.

Im Gegensatz zu Figur 1 ist in Figur 2 auf das Wärmeleitelement 34 verzichtet. Die Thermalbatterie 24 bzw. die Baugruppen 36a-c sind unmittelbar am Strukturabschnitt 16 angebracht. Thermalbatterie 24 und Strukturabschnitt 16 berühren also einander bzw. liegen aneinander an. Dies gilt entsprechend für den Elektrolyten 28, wobei lediglich ein wärmeleitfähiges Gehäuse bzw. dessen Wandung (nicht dargestellt) zwischen Elektrolyt 28 und Strukturabschnitt 16 angeordnet ist, welches jedoch kein Wärmeleitelement 34 im Sinne der vorliegenden Erfindung darstellt.

Der Strukturabschnitt 16 weist hier eine bestimmte Geometrie 40 auf, nämlich einen Umfangsabschnitt eines geraden Kreiszylindermantels. Die Thermalbatterie 24 weist die entsprechende Gegengeometrie 42 auf, die an die Geometrie 40 angepasst ist, also ebenfalls eine Form eines geraden Kreiszylindermantels, wobei dessen Außenradius dem Innenradius des Mantels der Geometrie 40 entspricht. Somit liegen Strukturabschnitt 16 und Thermalbatterie 24 zur thermischen Kopplung flächig aneinander an.

Die Thermalbatterie 24 ist hier flächig, nämlich als Kreiszylindermantelabschnitt ausgebildet, sodass sie mit deren Flachseite 44 (radial nach außen weisende Außenfläche des Zylindermantels) zur Anlage am Strukturabschnitt 16 ausgebildet ist bzw. entsprechend an diesem anliegt.

### Bezugszeichenliste

- 2: Flugkörper
- 4: Steuereinrichtung
- 6: Flug
- 8: Energie (elektrisch)
- 10: Energiequelle
- 12: Luft
- 14: Pfeil
- 16: Strukturabschnitt
- 18: Außenhaut
- 20: Unterseite
- 22: Wärme
- 24: Thermalbatterie
- 26a-c: Zelle
- 28: Elektrolyt
- 30: Kathode
- 32: Anode
- 34: Wärmeleitelement
- 36a-c: Baugruppe
- 38: Gesamtbatterie
- 40: Geometrie
- 42: Gegengeometrie
- 44: Flachseite

## Patentansprüche

1. Energiequelle (10) zur Bereitstellung elektrischer Energie (8) in einem bestimmungsgemäßen Flugkörper (2), der dazu eingerichtet ist, sich bei einem bestimmungsgemäßen Flug (6) an zumindest einem Strukturabschnitt (16) aufzuheizen, so dass dort Wärme (22) zur Verfügung steht,
- mit wenigstens einer Thermalbatterie (24) mit wenigstens einer Zelle (26a-c), die einen Elektrolyten (28) enthält, der zur Bereitstellung der elektrischen Energie (8) an der Thermalbatterie (24) durch Eintrag von Wärme (22) zu erwärmen ist,
- wobei zumindest einer der Elektrolyten (28) thermisch an den Strukturabschnitt (16) koppelbar ist, um zumindest einen Teil der beim Flug (6) am Strukturabschnitt (16) zur Verfügung gestellten Wärme (22) von dort zum Elektrolyten (28) zu übertragen.

2. Energiequelle (10) nach Anspruch 1,
**dadurch gekennzeichnet, dass**
die Energiequelle (10) ein die thermische Kopplung von Elektrolyt (28) und Strukturabschnitt (16) bewirkendes Wärmeleitelement (34) enthält, das thermisch an den Elektrolyten (28) gekoppelt und thermisch an den Strukturabschnitt (16) koppelbar ist.

3. Energiequelle (10) nach einem der vorhergehenden Ansprüche,
**dadurch gekennzeichnet, dass**
die Thermalbatterie (24) wenigstens zwei Baugruppen (36a-c) mit jeweils mindestens einer Zelle (26a-c) mit einem jeweiligen Elektrolyten (28) umfasst.

4. Energiequelle (10) nach Anspruch 3,
**dadurch gekennzeichnet, dass**
wenigstens zwei der Baugruppen (36a-c) elektrisch zu einer Gesamtbatterie (38) verbunden sind.

5. Energiequelle (10) nach einem der vorhergehenden Ansprüche,
**dadurch gekennzeichnet, dass**
wenigstens einer der Elektrolyten (28) dadurch thermisch an den Strukturabschnitt (16) koppelbar ist, dass die Thermalbatterie (24) unmittelbar am Strukturabschnitt (16) angebracht ist.

6. Energiequelle (10) nach einem der vorhergehenden Ansprüche,
**dadurch gekennzeichnet, dass**
der Strukturabschnitt (16) eine bestimmte Geometrie (40) aufweist und die Thermalbatterie (24) zumindest im Bereich des Elektrolyten (28) eine an die Geometrie (40) derart angepasste Gegengeometrie (42) aufweist, dass diese zur thermischen Kopplung flächig aneinander anlegbar sind.

7. Energiequelle (10) nach einem der vorhergehenden Ansprüche,
**dadurch gekennzeichnet, dass**
die Thermalbatterie (24) zumindest im Bereich des Elektrolyten (28) flächig und damit zur Anlage am Strukturabschnitt (16) mit deren Flachseite (44) ausgebildet ist.

8. Energiequelle (10) nach einem der vorhergehenden Ansprüche,
**dadurch gekennzeichnet, dass**
wenigstens einem der Elektrolyten (28), der thermisch an den Strukturabschnitt (16) koppelbar ist, keine aktive Wärmequelle zugeordnet ist.

9. Energiequelle (10) nach einem der vorhergehenden Ansprüche,
**dadurch gekennzeichnet, dass**
wenigstens einem der Elektrolyten (28), der thermisch an den Strukturabschnitt (16) koppelbar ist, keine thermische Isolierung zugeordnet ist.

10. Energiequelle (10) nach einem der vorhergehenden Ansprüche,
**dadurch gekennzeichnet, dass**
wenigstens einem der Elektrolyten (28), der thermisch an den Strukturabschnitt (10) koppelbar ist, kein interner Wärmespeicher der Thermalbatterie (24) zugeordnet ist.

11. Flugkörper (2), mit der Energiequelle (2) nach einem der vorhergehenden Ansprüche, bei dem der zumindest eine Elektrolyt (28) thermisch an den Strukturabschnitt (16) gekoppelt ist.

12. Flugkörper (2) nach Anspruch 11,
**dadurch gekennzeichnet, dass**
der Flugkörper (2) dazu eingerichtet ist, sich beim Flug (6) am Strukturabschnitt (16) aufgrund von Reibung mit Luft (12) aufzuheizen.

13. Flugkörper (2) nach einem der Ansprüche 11 bis 12,
**dadurch gekennzeichnet, dass**
der Strukturabschnitt (16) ein mit der Außenhaut (18) des Flugkörpers (2) wenigstes thermisch gekoppelter Strukturabschnitt (16) ist.

14. Flugkörper (2) nach einem der Ansprüche 11 bis 13,
**dadurch gekennzeichnet, dass**
der Strukturabschnitt (16) wenigstens ein Teil einer Unterseite (20) des Flugkörpers ist.

15. Flugkörper (2) nach einem der Ansprüche 11 bis 14,
**dadurch gekennzeichnet, dass**
der Flugkörper (2) dazu eingerichtet ist, sich im Flug (6) mit Überschallgeschwindigkeit fortzubewegen.
